(19) **Europäisches Patentamt / European Patent Office / Office européen des brevets**

(11) **EP 2 322 486 B1**

(12) **EUROPEAN PATENT SPECIFICATION**

(45) Date of publication and mention
of the grant of the patent:
**22.01.2014 Bulletin 2014/04**

(51) Int Cl.:
***C02F 1/469*** *(2006.01)*

(21) Application number: **09175026.5**

(22) Date of filing: **04.11.2009**

(54) **An apparatus and method for removal of ions**

Vorrichtung und Verfahren zur Ionenentfernung

Dispositif et procédé pour l'élimination d'ions

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**18.05.2011 Bulletin 2011/20**

(73) Proprietor: **Voltea B.V.**
**3013 AL Rotterdam (NL)**

(72) Inventors:
• **Van der Wal, Albert**
**2333 AL Leiden (NL)**

• **Reinhoudt, Hank Robert**
**2333 AL Leiden (NL)**
• **Kerpels, Freddie**
**3191 PG Hoogvliet (NL)**

(74) Representative: **Fluit, Jeroen**
**Exter Polak & Charlouis B.V. (EP&C)**
**P.O. Box 3241**
**2280 GE Rijswijk (NL)**

(56) References cited:
**WO-A2-2006/050079** **US-A- 5 954 937**
**US-A1- 2005 103 644** **US-A1- 2009 045 048**

## Description

### Field of the invention

An apparatus for removal of ions, the apparatus being provided with:

a water inlet for letting water in the apparatus;
a water outlet for letting water out of the apparatus;
a capacitor; and,

a spacer for separating a first and a second electrode of the capacitor and allowing water to flow in between the electrodes.

### Background art

In recent years one has become increasingly aware of the impact of human activities on the environment and the negative consequences this may have. Ways to reduce, reuse and recycle resources are becoming more important. In particular, clean water is becoming a scarce commodity. Therefore, various methods and devices for purifying water have been published.

A method for ion removal from water is by capacitive deionisation, using an apparatus provided with a flow through capacitor (FTC) for removal of ions in water, US Patent number 5,954,937 discloses such a capacitive deionisation method. The FTC functions as an electrically regenerable cell for capacitive deionisation. By charging electrodes, ions are removed from an electrolyte and are held in electric double layers at the electrodes. The electrodes can be (partially) electrically regenerated to desorb such previously removed ions without adding chemicals.

The apparatus for removal of ions comprises one or more pairs of spaced apart electrodes (a cathode and an anode) and one or more spacers, separating the electrodes and allowing water to flow between the electrodes.

The electrodes may be made from high surface area electrically conducting materials such as activated carbon, carbon black, carbon aerogels, carbon nano fibres, carbon nano tubes, graphene or mixtures thereof.

The electrodes may be placed as a separate layer on top of a current collector or may alternatively be coated directly onto the current collector. Current collectors are made from electrically conductive materials and allow the transport of charge in and out of the electrode.

The apparatus is provided with a housing comprising a water inlet for letting water in the housing and a water outlet for letting water out of the housing.

In the housing of the apparatus for removal of ions the layers of current collectors, electrodes and spacers may be stacked in a "sandwich" fashion or spirally wounded by compressive force, normally by mechanical fastening.

A charge barrier may be placed between the electrode and a spacer, the term charge barrier referring to a layer of material, which can hold an electric charge and which is permeable or semi-permeable for ions. Ions with the same charge signs as that in the charge barrier cannot pass the charge barrier. Therefore, ions which are present in the electrode compartment adjacent to the charge barrier and which have the same charge sign as the charge in the charge barrier are retained or trapped in the electrode compartment. A charge barrier may allow an increase in ion removal efficiency as well as a reduction in the overall energy consumption for ion removal.

Once the electrodes of the capacitor become saturated with ions during ion removal the capacitor may be regenerated by going to the regeneration mode by shunting the electrodes or even reversing the polarity of the electrodes. Ions that were previously adsorbed in the electrical double layer at the electrodes are released from the electrode into the water flowing in between the electrodes, e.g. through the spacer. The water may be directed to a waste water output until substantially all the ions are released, then the capacitor is ready for ion removal again. The ions released by the electrodes may comprise hardness ions such as calcium and alkalinity ions such as carbonate and bicarbonate ions. If the concentration of these ions in the waste water becomes to high these ions can precipitate and form scaling. Scaling in a FTC module may clog up the water flow path and possibly also contaminate the electrodes, particularly the cathode. This may negatively influence the performance of a FTC module or even cause the FTC module to stop working.

### Summary of the invention

It is an object of the invention to make the apparatus for ion removal less sensitive to scaling.

According to a first embodiment of the invention there is provided an apparatus for removal of ions, the apparatus being provided with:

a water inlet for letting water in the apparatus;
a water outlet for letting water out of the apparatus;

a capacitor; and,

a spacer for separating a first and a second electrode of the capacitor and allowing water to flow in between the electrodes; wherein the apparatus comprises a regeneration mode controller for controlling during a regeneration mode - in which ions previously attracted to the capacitor are released in a waste water stream - one or more of:

the electrical current flowing to the capacitor;
the voltage on the capacitor; and,
the water flowing in between the electrodes,

the regeneration mode controller being constructed and arranged to control one or more of the electrical current, the voltage, and the water flow during the regeneration mode such that the Langelier Saturation Index (LSI) in the waste water is below a LSI threshold value of preferably 3, more preferably 2, even more preferably 1, and most preferably 0.5 to minimize scaling in the apparatus.

The present invention also relates to a method for removal of ions wherein use is made of the apparatus.

According to a further embodiment of the invention there is provided a method of operating an apparatus for removal of ions, wherein the apparatus comprises a capacitor and a housing, the method comprising:

allowing water to enter the housing via a water inlet;
allowing the water to flow in between a first and a second electrode of the capacitor to a water outlet provided in the housing; and, during an ion removal mode:

charging the capacitor by connecting the capacitor to a power source;
removing ions from the water by attracting the ions to the first and second electrode; and during a regeneration mode:

releasing ions from the electrodes in the water in between the electrodes while controlling one or more of the electrical current through the capacitor, the voltage on the capacitor, and the water flowing through the capacitor during the regeneration mode, such that the Langelier Saturation Index (LSI) in the waste water is below a LSI threshold value of preferably 3, more preferably 2, even more preferably 1, and most preferably 0.5 to minimize scaling in the apparatus.

These and other aspects, features and advantages will become apparent to those of ordinary skill in the art from reading the following detailed description and the appended claims. For the avoidance of doubt, any feature of one aspect of the present invention may be utilised in any other aspect of the invention. It is noted that the examples given in the description below are intended to clarify the invention and are not intended to limit the invention to those examples per se. Similarly, all percentages are weight/weight percentages unless otherwise indicated. Numerical ranges expressed in the format "from x to y" are understood to include x and y. When for a specific feature multiple preferred ranges are described in the format "from x to y", it is understood that all ranges combining the different endpoints are also contemplated.

**Brief description of the figures**

Embodiments of the invention will be described, by way of example only, with reference to the accompanying schematic drawings in which corresponding reference symbols indicate corresponding parts, and in which:

Figure 1 shows a cross-section of an apparatus for removal of ions;
Figure 2 shows schematically how the apparatus of figure 1 can be controlled;
Figure 3a-3d shows the voltage on the capacitor and the conductivity of the waste water during tests 1 to 4;
Figure 4 shows the molar ratio of calcium and alkalinity during tests 1 to 4;
Figure 5a to 5d showing the LSI profile during tests 1 to 4; and,
Figure 6 shows the results of test 5 (durability test).

**Detailed description of the invention**

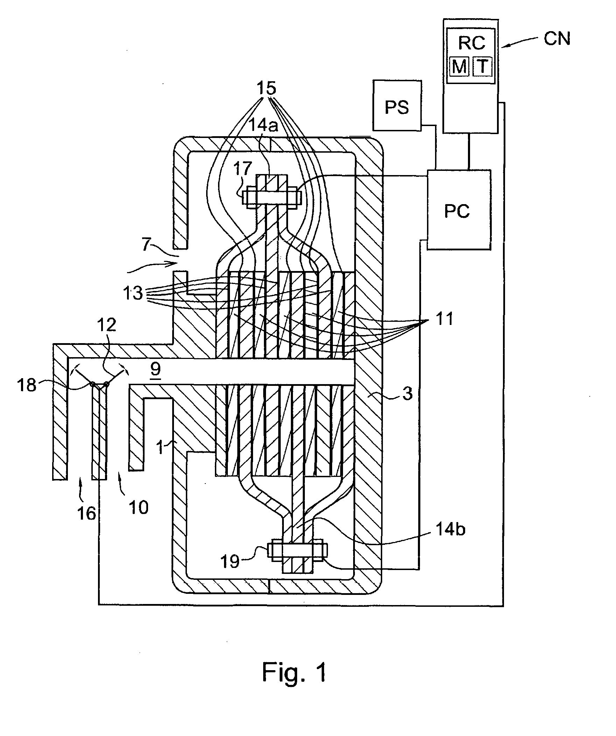

Figure 1 shows a schematic cross-section of an apparatus for removal of ions according to the invention. The apparatus has a housing with a water inlet 7 and a water outlet 9. The housing may be made of a relatively hard material e.g. a hard plastic.

Here the housing is composed of a first housing part 1 and a second housing part 3. By assembling, e.g.

pressing, the first and second housing parts on each other, for example with a bolt and nut or welding (not shown) the housing is made water tight.

In the housing a flow through capacitor (FTC) is arranged, at least including a pair a spaced apart electrodes, here first electrode 13 and a second electrode 15. A spacer 11 is arranged to separate the electrodes 13, 15 of the flow through capacitor (FTC) and allow for water flow in between the electrodes 13, 15.

During ion removal of the water, the water flows from the inlet 7 to the outlet 9 through the space between a first electrode 13 and a second electrode 15.

The current collectors 14a and 14b are arranged, here clamped, within the housing and connected to the power converter PC. By creating an electrical potential difference between the first and second electrode by a power converter PC, for example by applying a positive voltage to the first electrode (the anode) 13 and a negative voltage to the second electrode (cathode) 15 the anions of the water flowing in between the electrodes, e.g. through the spacer 11, are attracted to the first electrode and the cations are attracted to the second electrode. In this way the ions (anions and cations) will be removed from the water flow. The purified water may be discharged to the purified water outlet 10 by the valve 12.

Once the electrodes are saturated with ions the electrodes 13, 15 are regenerated, whereby the ions are released into the water in between the electrodes 13, 15. The water with the increased ion content is flushed away by closing purified water outlet 10 with a valve 12 under control of the controller CN and opening waste water outlet 16. Once most ions are released from the electrodes and the water with increased ion content is flushed away via the waste water outlet 16 the electrodes are regenerated and can be used again for attracting ions. The controller may be provided with a regeneration mode controller RC comprising a memory and a timer.

A power converter PC under control of the controller CN is used to convert the power from the power source PS to the right electrical potential. The electrical potential differences between the anode and the cathode are rather low, for example lower than 12 Volt, preferably lower than 6 Volt, even more preferably lower than 2 and most preferably less than 1.5 Volts.

It is preferred that the electrical resistance of the electrical circuit is low. For this purpose, current collectors 14a which are in direct contact with the first electrodes are connected to each other with the first connector 17 and the current collectors 14b which are in direct contact with the second electrodes are connected to each other with the second connector 19.

The current collectors 14a and 14b may be made substantially metal free to keep them corrosion free in the wet interior of the housing and at the same time cheap enough for mass production.

The electrodes 13, 15 may be produced from a substantially metal free electrically conductive high surface area material, such as activated carbon, carbon black, carbon aerogels, carbon nano fibres, carbon nano tubes, graphene or mixtures thereof, which are placed on both sides of the current collector. The high surface area layer is a layer with a high surface area in square meter per weight of material, for example more than 500 square meters per gram of material. This set-up may ensure that the capacitor works as an electrical double layer capacitor with sufficient ion storage capacity. The overall surface area of even a thin layer of such a material is many times larger than a traditional material like aluminum or stainless steel, allowing many more charged species such as ions to be stored in the electrode material. The ion removal capacity of the apparatus for removal of ions is thereby increased.

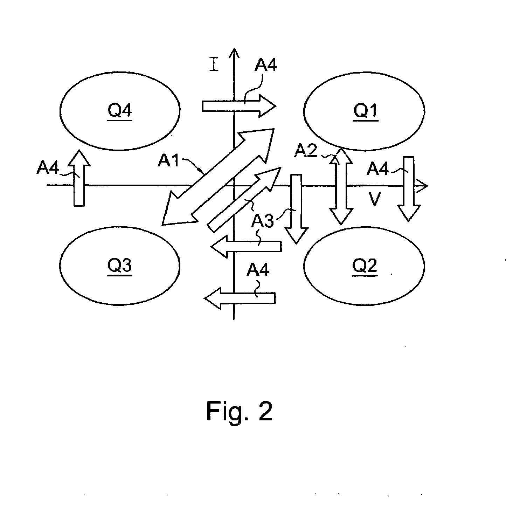

Figure 2 shows schematically how the apparatus for removal of ions can be operated. During ion removal mode Q1 the electrical double layer capacitor is charged at a positive voltage V and with a positive current I. Ions are extracted from the water and once the electrodes of the capacitor become saturated with ions the capacitor may be regenerated by going in one step to the regeneration mode Q3 by reversing the polarity of the electrodes by applying a negative voltage with a negative current. After the ions are released from the electrode, then the capacitor is ready for ion removal in mode Q1 again. Running the flow through capacitor this way is depicted by the arrow A1.

Alternatively, the capacitor may be regenerated by shunting the electrical circuit, which results in a negative current in the first electrode regeneration mode Q2. The energy that is released during the first electrode regeneration can be recovered and returned to the power source in a first energy recovery mode. This may help to reduce the overall energy consumption of the apparatus for removal of ions. After the first electrode regeneration mode Q2, the capacitor may be used in the ion removal mode Q1 again. Running the flow through capacitor in this way is depicted by the arrow A2.

After the first electrode regeneration mode Q2, the electrodes may be further regenerated in a second electrode regeneration mode Q3 by applying a negative voltage, which results in a negative current and a further release of ions. After the ions are released from the electrode, then the capacitor is ready for ion removal in mode Q1 again. Running the flow through capacitor this way is depicted by the arrow A3.

After the second electrode regeneration mode Q3 the energy stored on the capacitor during the second regeneration mode Q3 may be recovered to the power source in a second energy recovery mode Q4. This full cycle which includes the ion removal mode, the first electrode regeneration mode / the first energy recovery mode, the second electrode regeneration mode and the second energy recovery mode is depicted by the arrows A4. The flow through capacitor may be provided with a water valve 12 (in figure 1) for discharging the waste water during the first electrode regeneration mode Q2 and the second electrode regeneration mode Q3 into a waste water outlet 16. During ion removal Q1 the water valve 12 will be switched such that the water will go to a purified water outlet 10.

In the first and the second electrode regeneration mode the concentration of calcium and carbonate ions in the waste water may increase and if the concentration of these ions in the waste water becomes too high these ions can precipitate and form scaling. The controller CN is therefore provided with a regeneration mode controller RC constructed and arranged to control one or more of the current flow, the voltage, and the water flow during the regeneration mode such that the Langelier Saturation Index (LSI) in the waste water is below or close to a certain LSI threshold value. This threshold value is below 3, preferably below 2, more preferably below 1, or even below 0.5. The Langelier Saturation Index (sometimes Langelier Stability or scaling Index) is a calculated number used to predict the calcium carbonate stability of the waste water. It indicates whether the waste water will precipitate, dissolve, or be in equilibrium with calcium carbonate. Langelier developed a method for predicting the pH at which water is saturated in calcium carbonate (called pHs). The LSI is expressed as the difference between the actual system pH and the saturation pH.

$$LSI = pH - pHs$$

If the actual pH of the water is below the calculated saturation pH, the LSI is negative and the water has no scaling potential. If the actual pH exceeds pHs, the LSI is positive, the water is supersaturated with CaCO3, and the water has a tendency to form calcium carbonate scale. At increasing positive index values, the scaling potential increases.

- For LSI > 0, water is super saturated and tends to precipitate CaCO3.
- For LSI = 0, water is saturated (in equilibrium) with CaCO3. CaCO3 is neither precipitated nor dissolved.
- For LSI < 0, water is under saturated and tends to dissolve solid CaCO3.

In practice, water with an LSI between -0.5 and +0.5 will not display enhanced mineral dissolving or scale forming properties. Water with an LSI below -0.5 tends to exhibit noticeably increased dissolving abilities while water with an LSI above +0.5 tends to exhibit noticeably increased scale forming properties. The LSI is temperature sensitive and becomes more positive as the water temperature increases.

The regeneration mode controller RC is constructed and arranged to control one or more of the current flow, the voltage, and the water flow during the regeneration mode such that the Langelier Scaling Index in the waste water is below a LSI threshold value of preferably 2, more preferably 1.5, even more preferably 1, and most preferably 0.5. If the LSI of the waste water stays below the above mentioned threshold values scaling in the FTC is minimized.

The electrical current during the regeneration mode may be controlled by the regeneration mode controller RC such that the current will be lower than a threshold current so as to keep the Langelier Saturation Index in the waste water below the LSI threshold value. The threshold current may be stored in a memory M and compared with the actual current by the regeneration mode controller RC and the actual current may be adjusted to a value below the threshold current. The threshold current may be calibrated by measuring the Langelier Saturation Index of the waste water and adjusting the electrical current through the capacitor such that the LSI is below the LSI threshold value of preferably 2, more preferably 1.5, even more preferably 1, and most preferably 0.5 and storing the adjusted current in the memory as the threshold current. By controlling the current during regeneration to below the threshold current the LSI of the waste water can be kept below the LSI threshold value.

The apparatus may have a valve 18 controlled by the regeneration mode controller RC to control the amount of waste water directed to a waste water output 16 during the regeneration mode such that scaling is minimized in the apparatus. The regeneration mode controller RC may control both the current and the water flow through the capacitor to keep the LSI value of the water below the threshold values.

The regeneration mode controller RC may control the voltage during the regeneration mode such that the voltage will follow a controlled voltage profile so as to keep the Langelier Scaling Index in the waste water is below a LSI threshold value. The controlled voltage profile may follow a pre-described mathematical function, for example a predetermined stepwise voltage profile or a gradually decreasing voltage profile as a function of time, for example an exponentially decaying voltage profile. The controller may therefore be provided with a memory M to store the threshold voltage profile and with a timer T to make it possible to follow the threshold voltage profile if it is dependent on the time. The threshold voltage profile may be dependent on the waste water which has flown through the flow through capacitor of the apparatus or the current flow through the capacitor. In both cases the regeneration mode controller RC may be connected to a pump speed controller or a measurement system for measuring the waste water flow through the capacitor or the electrical current to and from the capacitor in the regeneration mode.

The apparatus for ion removal may have a valve 18 and controlled by the regeneration mode controller RC for controlling the amount of waste water directed to a waste water output 16 during the regeneration mode to be larger than a threshold waste water flow such that scaling is minimized in the apparatus. The memory M may store the waste water threshold.

During use the apparatus for removal of ions may be operated by:

allowing water to enter the housing via the water inlet 7;
allowing the water to flow in between a first and a second electrode 13, 15 of the capacitor to a water outlet 9 provided in the housing 1, 3 and, during ion removal mode:

charging the capacitor by connecting the capacitor to a power source PS via a power converter PC for converting a supply voltage of a power source PS to a charging voltage;
removing ions from the water by attracting the ions to the first and second electrode 13, 15; and during a regeneration mode:

releasing ions from the electrodes 13, 15 in the water in between the electrodes while controlling one or more of the current flow through the capacitor, the voltage on the capacitor, and the water flowing through the capacitor during the regeneration mode such that scaling is minimized in the apparatus.

The regeneration mode controller RC may also be connected to sensors that measure online for example the pH, the calcium concentration, temperature or other relevant parameters in the waste water. These data may be used to determine the LSI in the waste stream and to alter the LSI by varying for example the current, the voltage or the flow through the FTC module.

The regeneration mode controller RC or controller CN may control a maintenance cycle for minimizing scaling in the FTC. One or more of the electrical current, the voltage, and the water flow during a maintenance cycle may be controlled such that the Langelier Saturation Index (LSI) in the water becomes below a certain LSI corrosive threshold value. The maintenance cycle may comprise purifying water for a long period of time without any water flowing through the FTC. The maintenance controller may for this purpose close the valves 18 or 12 or switch of a pump used to pump the water through the FTC. The purified water would get very clean with an LSI getting lower than a certain LSI corrosive threshold, for example lower than 0 or preferably lower than -0.5 which is corrosive and may dissolve any scaling present in the apparatus. By applying the maintenance cycle once in a while, for example once in the 10 to 10000 purifying steps, more preferably once in the 100 to 1000 purifying modes scaling can be cleaned away periodically out of the apparatus.

## Examples

Experiments are carried out using a FTC module containing 2 stacks of each 23 repeating unit cells with an unit cell surface area of 226cm^2. For tests 1-4 only 90 seconds for the ion removal mode Q1 was used at +1.5V and 60 seconds of regeneration, whereby the flow rate during regeneration was the same as during purification in order to be able to collect enough samples for the alkalinity, hardness and pH analyses. In those cases the water recovery was only 60%. Samples were taken from the waste stream, immediately after the FTC water outlet, after 0.5 hour and 1 hour operation of the FTC system. All samples were analysed within 1 hour on hardness, alkalinity, pH and conductivity. The alkalinity was measured by a volumetric determination by titration with a strong acid (hydrochloric acid). By adding an indicator to the water the endpoint of the titration was determined by means of a change in color. The quantity of reagent (hydrochloric acid) added until the color changes (at pH 4.3) is a measurement for the alkalinity. The alkalinity test was done with Fluka Aquanal-plus acid capacity (Alkalinity) test set #32017.

Calcium levels were measured by means of a complexometric titration with EDTA. The endpoint of the titration was determined adding a (metallochromic) indicator to the sample. A color change is observed when EDTA replaces the indicator molecule as the ligand in the divalent ion complex. The amount of EDTA added to the sample until a change in color is observed is a measure for the Calcium level in the water.

Test 1: The 1st test is with a regeneration cycle with 60 seconds regeneration at reversed polarity and at a voltage of -1.5V. In order to be able to take enough water samples the flow was set at 1l/min, the same for purification and regeneration and no concentration step was used.

Test 2: The 2nd test was done at a modified regeneration cycle, whereby the voltage is not switched directly to -1.5V, but first to 0V -shunt- for 40 seconds and then to -1.5V for 20 sec.

Test 3: The 3rd test has also an adjusted regeneration cycle, where the voltage was first kept at +0.5V for 40 seconds and subsequently lowered to -1.5V for 20 sec

Test 4: In the 4th test the regeneration cycle is operated at a constant current of 25A. In practice the voltage will adapt to the current and gradually decrease with time.

Test 5: A 60 hour durability test at constant current conditions, whereby the flow during regeneration is at half the level of that during purification, 1l/min and 0.5l/min for 120seconds and 60 seconds respectively. The water recovery under those conditions is 80%.

| Feed water was prepared based on IEC 60734 (Ca only) | |
|---|---|
| Conductivity | 0.980 mS / cm |
| Temperature | 21°C |
| pH | 7.8 |
| Composition | Ca: 3.0 mmol (120 ppm) ; HC03: 4.5 mmol/l (275 ppm) Total Hardness: 30 FH |

**On-line measurements**

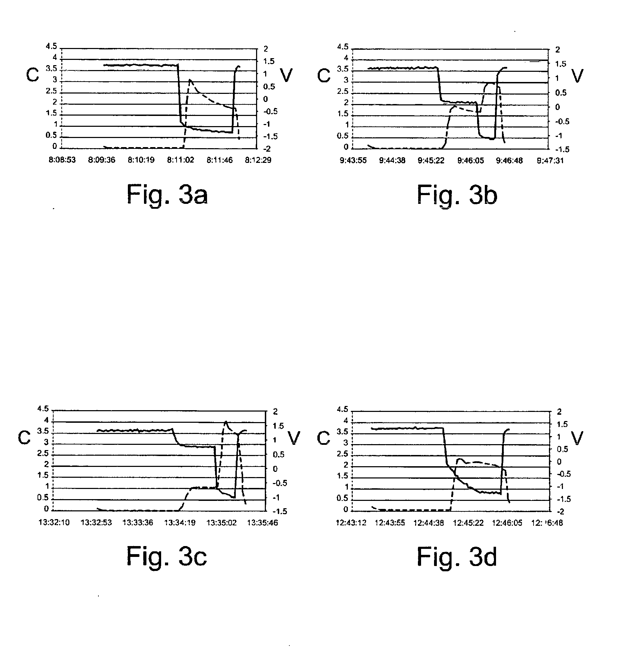

Figure 3a to 3d show the conductivity and voltage profiles for a complete cycle. The solid lines are the applied voltage profiles and plotted on the second y-axis with a V. The dashed lines are the conductivity measurements measured at the waste water outlet 16 in figure 1 of the FTC module and plotted on the first Y-axis with C.

Figure 3a shows the voltage and conductivity profile of test 1, the solid line depicting that the voltage drops to -almost 1.5V after 8:11 and the dashed line depicting the conductivity showing an initial peak release of ions during regeneration at 3 mS/cm, followed by a gradual decrease.

In figure 3b (test 2) the solid line of the voltage decreases first to 0V after 9:45 and after 40 seconds drops further in the direction of -1.5V. The release of ions follows the voltage curve, the conductivity is first around 2 mS/cm and after 40 seconds the conductivity increases to 3 mS/cm.

In figure 3c (test 3) the solid line shows that the voltage is first switched from almost 1.5V to +0.5V for 40 seconds and then decreased into the direction of the value -1.5V just before 13:35. During the +0.5V step the release of ions is lower, compared to test 2, conductivity (~ 1mS/cm). Also a peak release in the second step (switch to -1.5V) can be observed.

Finally, Figure 3d (test 4) shows a situation where constant current is used for the regeneration cycle and shows no peak release of ions. In this same graph it can also be observed that the voltage gradually decreases in order to maintain the current at 25 A. (constant current regeneration)

**Off-line batch sampling**

Samples are taken during the regeneration cycle just after the FTC module. Samples are collected during 10 seconds. So, each regeneration cycle (60 sec.) results in 6 samples. All tests were carried out in duplicate. Each sample was analysed within one hour for pH, conductivity, Ca and alkalinity. The conductivity and pH data are summarised in table 1.

Table 1 : Average (n=2) conductivity and pH results of the waste stream

| time interval | | mean | Test 1 | | Test 2 | | Test 3 | | Test 4 | |
|---|---|---|---|---|---|---|---|---|---|---|
| (s) | | (s) | $\sigma(\mu s/cm)$ | pH | $\sigma(\mu s/cm)$ | pH | $\sigma(\mu s/cm)$ | pH | $\sigma(\mu s/cm)$ | pH |
| 0 | 10 | 5 | 1796 | 7.6 | 861 | 7.3 | 359 | 6.7 | 318 | 7.1 |
| 10 | 20 | 15 | 2810 | 7.9 | 1941 | 7.5 | 1054 | 7.2 | 2255 | 7.7 |
| 20 | 30 | 25 | 2415 | 8.0 | 1807 | 7.6 | 1100 | 7.3 | 2280 | 8.0 |
| 30 | 40 | 35 | 2185 | 8.1 | 1721 | 7.6 | 1088 | 7.3 | 2305 | 8.0 |
| 40 | 50 | 45 | 2025 | 8.1 | 2595 | 7.6 | 3085 | 7.4 | 2285 | 8.0 |
| 50 | 60 | 55 | 1902 | 8.1 | 3010 | 7.6 | 3790 | 7.5 | 2180 | 8.1 |

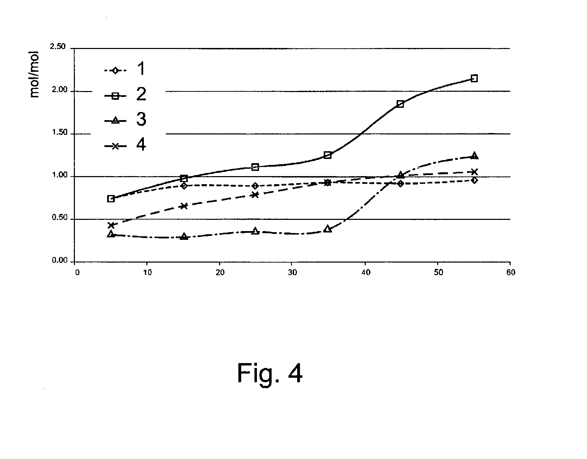

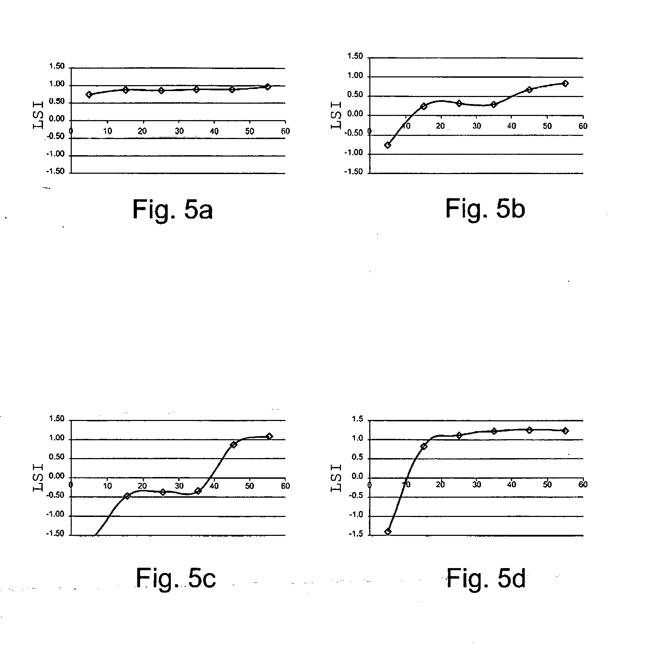

The molar ratio of the alkalinity and calcium are plotted in figure 4. From Figure 4 it can be observed that the ratio between calcium and alkalinity can vary from about 0.5 to 2. This indicates that carbonate ions are released faster from the electrode compartment than calcium ions, especially at lower voltages. Based on the above data we have calculated the Langelier Scaling Index (LSI). The results are shown in figure 5a to 5d.

A LSI of 0 to 0.5 has a slight scale potential, but is normally considered to be a safe zone, whereas at a LSI of 2, scale forming is expected. Under all four test conditions, the LSI during regeneration reaches values of about 1, which means that under the test conditions scale forming in the spacer compartment is manageable.

Although we have seen in test 1 (60 sec @-1.5V) that the conductivity, calcium and alkalinity levels decreases with time, figure 5a shows a slightly increasing LSI. The main reason for this is the increasing pH value. If the pH increases with 0.5, then under these conditions, the LSI will roughly also increase with 0.5.

**Test 5: durability test**

For the durability test the same setup has been chosen as that for test 4, except that the water recovery was 80%, by longer a desalination time of 120 seconds and reduced flow of 0.5 l/min during regeneration (see below in table 2).

Table 2 : FTC settings for the durability test

| Step | Power | Shunt | Inlet | Pure | Waste | Voltage (V) | Current (A) | time(s) | Flow(l/min) |
|---|---|---|---|---|---|---|---|---|---|
| 1 | on | off | on | | on | -1.5 | 30 | 60 | 0.5 |
| 2 | on | off | on | on | | 1.5 | 250 | 120 | 1.0 |

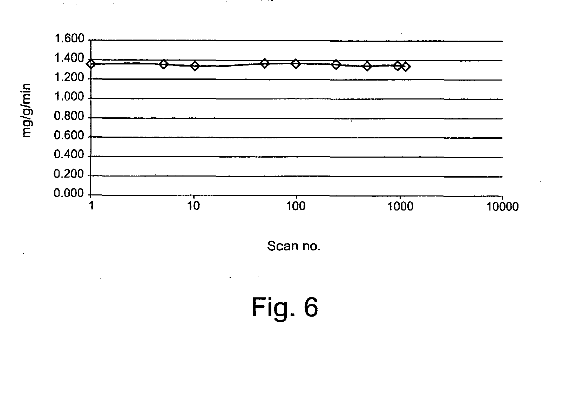

The system has run for 60 hours, which resulted in 1200 purification-regeneration cycles and ca 3000 litres service water. During this period the performance did not decrease and also the cell pressure didn't increase (p=0.25bar). This is depicted in figure 6 as the average deionization rate. The results are expressed as mg ions removed per gram carbon per minute.

While specific embodiments of the invention have been described above, it will be appreciated that the invention may be practised otherwise than as described. The description is intended to be illustrative, not limiting. Thus, it will be apparent to one skilled in the art that modifications may be made to the invention as described without departing from the scope of the claims set out below.

**Claims**

1. An apparatus for removal of ions, the apparatus being provided with:

   a water inlet for letting water in the apparatus;
   a water outlet for letting water out of the apparatus;
   a capacitor; and,
   a spacer for separating a first and a second electrode of the capacitor and allowing water to flow in between the electrodes; wherein the apparatus comprises a regeneration mode controller for controlling during a regeneration mode - in which ions previously attracted to the capacitor are released in a waste water stream - one or more of:

   the electrical current to the capacitor;
   the voltage on the capacitor; and,
   the water flow in between the electrodes;

   the regeneration mode controller being constructed and arranged to control one or more of the electrical current, the voltage, and the water flow during the regeneration mode such that the Langelier Saturation Index (LSI) in the waste water is below a LSI threshold value of preferably 3, more preferably 2, even more preferably 1, and most preferably 0.5 to minimize scaling in the apparatus.

2. The apparatus according to claim 1, wherein the regeneration mode controller is constructed and arranged to control the electrical current during the regeneration mode such that the current will be lower than a threshold current.

3. The apparatus according to any of the preceding claims, wherein the apparatus comprises a valve which is controlled by the regeneration mode controller constructed and arranged to control the amount of waste water directed to a waste water output during the regeneration mode to minimize scaling in the apparatus.

4. The apparatus according to any of the preceding claims, wherein the regeneration mode controller is constructed and arranged to control the voltage during the regeneration mode such that the voltage will follow a certain voltage profile.

5. The apparatus according to any of the preceding claims, wherein the apparatus comprises a valve which is controlled by the regeneration mode controller for controlling the amount of waste water directed to a waste water output during the regeneration mode to be larger than a waste water threshold to minimize scaling in the apparatus.

6. The apparatus according to any of the preceding claims, wherein the regeneration mode controller is provided with a memory for storing one or more of: a waste water threshold, a threshold current, a threshold voltage profile, or a combination thereof.

7. The apparatus according to any of the preceding claims, wherein the regeneration mode controller is constructed and arranged to control one or more of the electrical current, the voltage, and the water flow during a maintenance cycle such that the Langelier Saturation Index (LSI) in the water becomes below a certain LSI corrosive threshold value in which scaling present in the apparatus is dissolved.

8. A method of operating an apparatus for removal of ions, the apparatus comprising a capacitor and a housing, the method comprising:

allowing water to enter the housing via a water inlet;
allowing the water to flow in between a first and a second electrode of the capacitor to a water outlet provided in the housing; and, during an ion removal mode:

charging the capacitor by connecting the capacitor to a power source;
removing ions from the water by attracting the ions to the first and second electrode; and during a regeneration mode:
releasing ions from the electrodes in the water in between the electrodes while controlling one or more of the electrical current through the capacitor, the voltage on the capacitor, and the water flowing through the capacitor during the regeneration mode such that the Langelier Saturation Index(LSI) in the waste water is below a LSI threshold value of preferably 3, more preferably 2, even more preferably 1, and most preferably 0.5 to minimize scaling in the apparatus.

9. The method according to claim 8, wherein the method comprises controlling the electrical current during the regeneration mode such that the current will be lower than a threshold current so as to keep the Langelier Saturation Index in the waste water below a LSI threshold value.

10. The method according to claims 8 or 9, wherein the method comprises controlling the voltage during the regeneration mode such that the voltage will follow a certain voltage profile so as to keep the Langelier Saturation Index in the waste water below a LSI threshold value.

11. The method according to any of claims 8 to 10, wherein the method comprises calibrating the apparatus for removal of ions by measuring the Langelier Saturation Index of the waste water and adjusting one or more of the electrical current through the capacitor, the voltage on the capacitor, and the water flowing through the capacitor on a controller.

12. The method according to any of claims 8 to 11, wherein the method comprises connecting the regeneration mode controller RC to one or more sensors that measure online parameters like for example the pH, Ca concentration, temperature in the waste water and using these data to determine the LSI in the waste stream and to alter the LSI by varying for example the electrical current, the voltage, or the water flow through the FTC module.

**Patentansprüche**

1. Vorrichtung zum Entfernen von Ionen, wobei die Vorrichtung versehen ist mit:

einem Wassereinlass zum Einleiten von Wasser in die Vorrichtung;
einem Wasserauslass zum Ablassen von Wasser aus der Vorrichtung;
einem Kondensator, und
einem Abstandshalter, der eine erste von einer zweiten Elektrode des Kondensators trennt und es ermöglicht, dass das Wasser zwischen den Elektroden fließen kann, wobei die Vorrichtung eine Regenerationsmodussteuerung umfasst zur Steuerung von einem oder mehreren der Folgenden während eines Regenerationsmodus - bei dem Ionen, die zuvor an den Kondensator angezogen wurden, in einen Abwasserstrom freigesetzt werden:

des elektrischen Stroms zu dem Kondensator;
der Spannung an dem Kondensator, und
des Wasserflusses zwischen den Elektroden;
wobei die Regenerationsmodussteuerung konstruiert und angeordnet ist, um Stromfluss und/oder Spannung und/oder den Wasserfluss während des Regenerationsmodus so zu steuern, dass der Langelier-Sättigungsindex (LSI) im Abwasser unter einem LSI-Schwellenwert von vorzugsweise 3, besonders bevorzugt 2, noch mehr bevorzugt 1, und am meisten bevorzugt 0,5 liegt, um Ablagerungen in der Vorrichtung zu minimieren.

2. Vorrichtung nach Anspruch 1, wobei die Regenerierungsmodussteuerung konstruiert und angeordnet ist, um den elektrischen Strom während des Regenerationsmodus so zu steuern, dass der Strom kleiner als ein Schwellenstrom ist.

3. Vorrichtung nach einem der vorhergehenden Ansprüche, wobei die Vorrichtung ein Ventil umfasst, das durch die Regenerationsmodussteuerung gesteuert wird und konstruiert und angeordnet ist, um die Menge an Abwasser zu steuern, die während des Regenerationsmodus zu einem Abwasserausgang hin fließt, um Ablagerungen in der Vorrichtung zu minimieren.

4. Vorrichtung nach einem der vorhergehenden Ansprüche, wobei die Regenerierungsmodussteuerung konstruiert und angeordnet ist, um die Spannung während des Regenerationsmodus so zu steuern, dass die Spannung einem bestimmten Spannungsprofil folgt.

5. Vorrichtung nach einem der vorhergehenden Ansprüche, wobei die Vorrichtung ein Ventil umfasst, das durch die Regenerationsmodussteuerung so gesteuert wird, dass die während des Regenerationsmodus zu einem Abwasserausgang fließende Abwassermenge größer ist als ein Abwasserschwellenwert, um Ablagerungen in der Vorrichtung zu minimieren.

6. Vorrichtung nach einem der vorhergehenden Ansprüche, wobei die Regenerierungsmodussteuerung einen Speicher zum Speichern von einem oder mehreren der Folgenden umfasst: einen Abwasserschwellenwert, einen Schwellenstrom, ein Schwellenspannungsprofil oder eine Kombination davon.

7. Vorrichtung nach einem der vorhergehenden Ansprüche, wobei die Regenerierungsmodussteuerung konstruiert und angeordnet ist, um den elektrischen Strom und/oder die Spannung und/oder den Wasserfluss während des Wartungszyklus so zu steuern, dass der Langelier-Sättigungsindex (LSI) im Wasser unter einem LSI-Korrosions-Schwellenwert liegt, in dem in der Vorrichtung vorhandene Ablagerungen gelöst werden.

8. Verfahren zum Betreiben einer Vorrichtung zum Entfernen von Ionen, wobei die Vorrichtung einen Kondensator und ein Gehäuse umfasst, wobei das Verfahren umfasst:

Einlassen von Wasser in das Gehäuse über einen Wassereinlass;
Fließenlassen von Wasser zwischen einer ersten und einer zweiten Elektrode des Kondensators zu einem in dem Gehäuse vorgesehenen Wasserauslass hin; und, während eines Ionenentfernungsmodus:

Laden des Kondensators durch Verbinden des Kondensators mit einer Stromquelle;
Entfernen von Ionen aus dem Wasser durch Anziehung der Ionen an die erste und zweite Elektrode, und während eines Regenerationsmodus:

Freisetzen von Ionen von den Elektroden in das Wasser zwischen den Elektroden, während eines oder mehrere der Folgenden gesteuert werden: der elektrische Strom durch den Kondensator, die Spannung am Kondensator, und der Wasserfluss durch den Kondensator während des Regenerationsmodus so, dass der Langelier-Sättigungsindex (LSI) im Abwasser unter einem LSI-Schwellenwert von vorzugsweise 3, besonders bevorzugt 2, noch mehr bevorzugt 1, und am meisten bevorzugt 0,5 liegt, um Ablagerungen in der Vorrichtung zu minimieren.

9. Verfahren nach Anspruch 8, wobei das Verfahren das Steuern des elektrischen Stroms während des Regenerationsmodus umfasst, sodass der Strom kleiner als ein Schwellenstrom ist, damit der Langelier-Sättigungsindex im Abwasser unter einem LSI-Schwellenwert liegt.

**10.** Verfahren nach einem der Ansprüche 8 oder 9, wobei das Verfahren das Steuern der Spannung während des Regenerationsmodus umfasst, sodass die Spannung einem bestimmten Spannungsprofil folgt, damit der Langelier-Sättigungsindex im Abwasser unter einem LSI-Schwellenwert liegt.

**11.** Verfahren nach einem der Ansprüche 8 bis 10, wobei das Verfahren das Kalibrieren der Vorrichtung zum Entfernen von Ionen durch Messung des Langelier-Sättigungsindex des Abwassers und Einstellen eines oder mehrerer der Folgenden umfasst: des elektrischen Stroms durch den Kondensator, der Spannung am Kondensator und des Wasserflusses durch den Kondensator auf eine Steuerung.

**12.** Verfahren nach einem der Ansprüche 8 bis 11, wobei das Verfahren das Verbinden der Regenerationsmodussteuerung RC mit einem oder mehreren Sensoren umfasst, die online Parameter wie zum Beispiel den pH-Wert, die Ca-Konzentration, die Temperatur in dem Abwasser messen, und die Verwendung dieser Daten zur Bestimmung des LSI in dem Abwasserstrom und zur Änderung des LSI zum Beispiel durch Variieren des elektrischen Stroms, der Spannung oder des Wasserflusses durch das FTC-Modul.

## Revendications

**1.** Appareil pour l'élimination d'ions, l'appareil comprenant :

une entrée d'eau pour laisser entrer l'eau dans l'appareil ;
une sortie d'eau pour laisser sortir l'eau de l'appareil ;
un condensateur ; et,
un espaceur pour séparer une première et une deuxième électrode du condensateur et laisser l'eau s'écouler entre les électrodes ; où l'appareil comprend un dispositif de commande de mode de régénération pour commander pendant un mode de régénération, dans lequel des ions précédemment attirés vers le condensateur sont libérés dans un flux d'eaux usées, un ou plusieurs de :

le courant électrique vers le condensateur ;
la tension sur le condensateur ; et,
le débit d'eau entre les électrodes ;
le dispositif de commande de mode de régénération étant construit et agencé pour commander un ou plusieurs parmi le courant électrique, la tension, et le débit d'eau pendant le mode de régénération de sorte que l'indice de saturation de Langelier (LSI) dans les eaux usées soit inférieur à une valeur de seuil de LSI de préférence 3, plus préférablement 2, encore plus préférablement 1, et de manière préférée entre toutes 0,5 afin de réduire au minimum l'entartrage de l'appareil.

**2.** Appareil selon la revendication 1, dans lequel le dispositif de commande de mode de régénération est construit et agencé pour commander le courant électrique pendant le mode de régénération de sorte que le courant soit inférieur à un courant de seuil.

**3.** Appareil selon l'une quelconque des revendications précédentes, l'appareil comprenant une valve qui est commandée par le dispositif de commande de mode de régénération construit et agencé pour commander la quantité d'eaux usées dirigée vers une sortie d'eaux usées pendant le mode de régénération afin de réduire au minimum l'entartrage dans l'appareil.

**4.** Appareil selon l'une quelconque des revendications précédentes, dans lequel le dispositif de commande de mode de régénération est construit et agencé pour commander la tension pendant le mode de régénération de sorte que la tension suive un certain profil de tension.

**5.** Appareil selon l'une quelconque des revendications précédentes, l'appareil comprenant une valve qui est contrôlée par le dispositif de commande de mode de régénération pour commander la quantité d'eaux usées dirigée vers une sortie d'eaux usées pendant le mode de régénération de manière à être plus élevée qu'un seuil d'eaux usées afin de réduire au minimum l'entartrage dans l'appareil.

**6.** Appareil selon l'une quelconque des revendications précédentes, dans lequel le dispositif de commande de mode de régénération est pourvu d'une mémoire pour stocker l'un ou plusieurs de : un seuil d'eaux usées, un courant de seuil, un profil de tension de seuil, ou une combinaison de ceux-ci.

**7.** Appareil selon l'une quelconque des revendications précédentes, dans lequel le dispositif de commande de mode de régénération est construit et agencé pour commander l'un ou plusieurs du courant électrique, de la tension et du débit d'eau pendant un cycle de maintenance de sorte que l'indice de saturation de Langelier (LSI) dans l'eau devienne inférieur à une certaine valeur de seuil corrosif LSI dans laquelle le tartre présent dans l'appareil est dissous.

**8.** Procédé d'actionnement d'un appareil pour l'élimination d'ions, l'appareil comprenant un condensateur et un boîtier, le procédé comprenant les étapes consistant à :

laisser l'eau entrer dans le boîtier via une entrée d'eau ;
laisser l'eau s'écouler entre une première et une deuxième électrode du condensateur vers une sortie d'eau disposée dans le boîtier ; et, pendant un mode d'élimination d'ions :

charger le condensateur par connexion du condensateur à une source d'alimentation ;
éliminer les ions de l'eau par attraction des ions vers les première et deuxième électrodes ; et pendant un mode de régénération :

libérer des ions depuis les électrodes dans l'eau entre les électrodes tout en commandant l'un ou plusieurs du courant électrique à travers le condensateur, la tension sur le condensateur, et l'eau s'écoulant à travers le condensateur pendant le mode de régénération de sorte que l'indice de saturation de Langelier (LSI) dans les eaux usées soit au-dessous d'une valeur seuil de LSI de préférence 3, de préférence 2, encore plus préférablement 1, et de manière préférée entre toutes 0,5 pour réduire au minimum l'entartrage dans l'appareil.

**9.** Procédé selon la revendication 8, le procédé comprenant la commande du courant électrique pendant le mode de régénération de sorte que le courant soit inférieur à un courant de seuil de manière à maintenir l'indice de saturation de Langelier dans les eaux usées au-dessous d'une valeur de seuil de LSI.

**10.** Procédé selon les revendications 8 ou 9, le procédé comprenant la commande de la tension pendant le mode de régénération de sorte que la tension suive un certain profil de tension de manière à maintenir l'indice de saturation de Langelier dans les eaux usées au-dessous d'une valeur de seuil de LSI.

**11.** Procédé selon l'une quelconque des revendications 8 à 10, le procédé comprenant l'étalonnage de l'appareil pour l'élimination d'ions en mesurant l'indice de saturation de Langelier des eaux usées et l'ajustement d'un ou plusieurs parmi le courant électrique à travers le condensateur, la tension sur le condensateur, et l'eau s'écoulant à travers le condensateur sur un dispositif de commande.

**12.** Procédé selon l'une quelconque des revendications 8 à 11, le procédé comprenant la connexion du dispositif de commande de mode de régénération RC à un ou plusieurs capteurs qui mesurent des paramètres en ligne, par exemple, le pH, la concentration de Ca, la température dans les eaux usées et l'utilisation de ces données pour déterminer le LSI dans le flux d'eaux usées et pour modifier le LSI en faisant varier, par exemple, le courant électrique, la tension, ou le débit d'eau à travers le module FTC.

Fig. 1

Fig. 2

Fig. 3a

Fig. 3b

Fig. 3c

Fig. 3d

Fig. 4

Fig. 5a

Fig. 5b

Fig. 5c

Fig. 5d

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 5954937 A, water